# EUROPÄISCHE PATENTANMELDUNG

(11) **EP 1 321 225 A2**
(43) Veröffentlichungstag der Anmeldung: **25.06.2003**
(21) Anmeldenummer: 02028467.5
(22) Anmeldetag: 19.12.2002
(51) Int. Cl.: B23Q 7/14, B23Q 39/02

(54) **Bearbeitungsanlage mit mindestens einer Transportbahn und mehreren Bearbeitungsstationen**

(30) Priorität: 21.12.2001 DE 10163445
(71) Anmelder: GROB-Werke Burkhart Grob e.K., 87719 Mindelheim (DE)
(72) Erfinder: Lutz, Heinrich, 87742 Dirlewang (DE)
(74) Vertreter: Pfister, Stefan Helmut Ulrich

(57) **Zusammenfassung**

Die Erfindung betrifft eine Bearbeitungsanlage mit mindestens einer Transportbahn, die ein Werkstück mehreren Bearbeitungsstationen zuführt. In den Bearbeitungsstationen ist mindestens eine Werkzeugspindel vorgesehen. Das Werkstück wird während der Bearbeitung durch die Werkzeugspindeln bewegt.

## Beschreibung

Die Erfindung betrifft eine Bearbeitungsanlage, mit mindestens einer Transportbahn, die ein Werkstück mehreren Bearbeitungsstationen zuführt und in den Bearbeitungsstationen mindestens eine Werkzeugspindel vorgesehen ist und sich das Werkstück während einer Bearbeitungsdauer in der Bearbeitungsstation befindet und hierbei von zumindest einer Werkzeugspindel entlang mindestens einer Achse eine Bearbeitung erfährt.

Vorgenannte Bearbeitungsanlagen sind zum Beispiel als Transferstraßen bekannt. Sie dienen dazu komplexe Bearbeitungen an Werkstücken durchzuführen, wo eine Vielzahl von Werkzeugspindeln zur spanabhebenden Bearbeitung eingesetzt sind.

Hierzu ist es bekannt, die Werkstücke zum Beispiel auf sogenannten Vorrichtungswagen aufzuspannen, die die Werkstücke durch die verschiedenen Bearbeitungsstationen transportieren. Der Vorrichtungswagen (oder Schlitten) wird dabei in der Bearbeitungsstation genau positioniert und festgelegt, wodurch auch die genaue Lage des Werkstückes bezüglich der Referenzpunkte genau definiert ist. Umgekehrt ist die Werkzeugspindel entlang den drei Raumachsen genau positionierbar, wenn die Transferstraße flexibel (offen für Werkstückänderungen) sein soll. Die Steuerung bestimmt die entsprechende Bearbeitungslage im Hinblick auf den Referenzpunkt. Für die hohe Beweglichkeit der Werkzeugspindel entlang der Raumachsen ist natürlich ein entsprechender Aufwand bei der Ausgestaltung der Werkzeugspindel notwendig. Es sind Kreuzschlittenführungen bekannt, die eine hohe Beweglichkeit der Werkzeugspindel erlauben, aber auch entsprechend aufwendig sind. Da die Kreuzschlittenführungen zum Beispiel orthogonoal geschachtelt ausgeführt sind, ergibt sich insbesondere für die erste Führung oder Achse ein erheblicher Aufwand, da auf dieser das gesamte Gewicht der beiden weiteren Führungen und der Werkzeugspindel selber lastet.

Dies führt zum einen zu einem großen konstruktiven Aufwand bei der Führung beziehungsweise Positionierung der Werkzeugspindeln, zum anderen müssen starke Antriebe vorgesehen werden, um die Bearbeitung beziehungsweise Positionierung der Werkzeugspindeln hochdynamisch zu realisieren. Dies führt auch zu zusätzlichen Aufwand. Des Weiteren ist dieser Aufbau einer Bearbeitungsanlage nach dem Stand der Technik verhältnismäßig platzaufwendig.

Es wird vormals oftmals von Achse gesprochen, wobei der Begriff Achse hier nicht nur als Drehachse zu verstehen ist, sondern allgemein eine Richtung oder Raumrichtung beschreibt. Insbesondere ist unter der "Achse" auch die Einzelachse eines kartesischen oder orthogonalen Systems zu verstehen, bei welchem die verschiedenen Achsen insbesonders rechtwinklig aufeinander angeordnet sind und so eine Beschreibung eines Raumpunktes in drei Dimensionen erlaubt.

Die vorliegende Erfindung hat es sich zur Aufgabe gemacht, Bearbeitungsanlagen, wie eingangs beschrieben, zu entwickeln, bei welchen der hohe spindelseitige Aufwand für eine komfortable und gegebenenfalls auch komplexe Werkstückbearbeitung nicht mehr notwendig ist.

Zur Lösung dieser Aufgabe geht die Erfindung aus von einer Bearbeitungsanlage wie eingangs beschrieben und schlägt vor, daß sich das Werkstück während zumindest eines Teiles der Bearbeitungslinie bewegt.

Der erfindungsgemäße Vorschlag ergibt eine Vielzahl von Vorteilen. Zunächst ist es möglich, den Anlagenaufbau deutlich einfacher zu gestalten, da die erforderlichen Bewegungen beziehungsweise Achsen zwischen Werkstück und den Bearbeitungsspindeln beziehungsweise Werkzeugspindeln aufgeteilt sind. Da der konstruktive Aufwand für die Positionierung der Bearbeitungsspindel reduziert wird, verringern sich automatisch auch die für die Positionierung beziehungsweise Beschleunigung der Spindel notwendigen Kräfte, wodurch es möglich ist, kleiner dimensionierte Motoren bei gleicher Geschwindigkeit vorzusehen. Durch den erfindungsgemäßen Vorschlag wird es auch möglich, auf einen automatischen Werkzeugwechsel an den Bearbeitungsspindeln zu verzichten. Bei den bekannten Anlagen wurde ein Werkzeugwechsel vorgesehen, um den verhältnismäßig hohen Aufwand für die Werkzeugspindeln für eine Vielzahl unterschiedlicher Werkzeuge zu nützen. Wird aber das Werkzeug während einer zerspanenden Bearbeitung gewechselt, kann es passieren, daß bei dem Werkzeugwechsel Schmutz oder Späne auf den Kegel oder Flansch der Werkzeughalterung gelangen und so ein zuverlässiges Spannen des Werkzeuges vereiteln. Nach dem erfindungsgemäßen Vorschlag wird einfach eine weitere Spindel vorgesehen, die mit deutlich geringerem Aufwand realisierbar ist und nun die Funktion erfüllt, wie ein möglicher Werkzeugwechsel bei den bekannten Systemen. Hieraus resultiert eine deutlich höhere Sicherheit des Prozesses, da mögliche Prozeßstörungsquellen eliminiert werden.

Erfindungsgemäß wird vorgeschlagen, daß sich das Werkstück zumindest während eines Teiles der Bearbeitungsdauer bewegt. Die Bearbeitungsdauer bestimmt sich durch das Zeitintervall, in welchem sich das Werkstück in der Bearbeitungsstation befindet. Auf die konkrete Bearbeitung also gegebenenfalls die Montage oder die spanabhebende Bearbeitung durch das Werkzeug der Bearbeitungsspindel, kommt es dabei nicht allein an. Der erfindungsgemäße Vorschlag erlaubt eine gewisse Beweglichkeit des Werkstückes während der Bearbeitung, wobei neben einem Eingriff des Werkzeuges in das Werkstück natürlich auch entsprechende neue Positionierungen des Werkstückes während der Bearbeitungsdauer erfolgen.

In einer Weiterentwicklung der Erfindung wird vorgeschlagen, daß während der Bearbeitungsdauer das Werkzeug auf das Werkstück einwirkt und hierbei das Werkstück bewegt wird. Durch diese erfindungsgemäße Weiterentwicklung ist bereits eine ansonsten bei der Bewegung der Bearbeitungsspindel vorzusehende Achse eliminiert.

Des Weiteren ist alternativ gemäß der Erfindung vorgesehen, daß die Bearbeitungsstation mindestens zwei Werkzeugspindeln aufweist, und das Werkstück während der Bearbeitungsdauer von der ersten zur zweiten Werkzeugspindel bewegt wird. In gleicher Weise tritt auch hier der vorgenannte Vorteil zutage. Für eine Positionierung des Werkzeuges an der Werkzeugspindel wird die Bewegung des Werkstückes und nicht die Bewegung der Werkzeugspindel ausgenutzt. Dabei ist es natürlich möglich, daß während der Bearbeitungsdauer zunächst eine Bewegung des Werkstückes erfolgt, wenn das Werkzeug im Eingriff ist und hernach das Werkstück, mit dem gleichen Transportmittel, welches das Werkstück während der Bearbeitung durch das Werkzeug bewegte, zur nächsten Werkzeugspindel bewegt.

Ein Umspannen zwischen der Bearbeitungsbewegung (während der Bearbeitung durch das Werkzeug) und der Transportbewegung zu der nächsten Werkzeugspindel kann dabei günstigerweise entfallen, wodurch sich entsprechend Zeit einsparen läßt.

Des Weiteren ist erfindungsgemäß vorgesehen, daß für den Transport des Werkstückes zwischen den Bearbeitungsstationen ein Transportmittel dient und das Transportmittel das Werkstück auch während zumindest eines Teiles der Bearbeitungsdauer bewegt. Eine solche Anordnung ergibt eine Vielzahl von Vorteilen. Für die Bewegungsaufgaben des Werkstückes (Transport, Bewegung während der Werkstückbearbeitung, Bewegung zwischen zwei Werkzeugspindeln in einer Bearbeitungsstation) wird ein und dasselbe Transportmittel eingesetzt. Zusätzliche, andere Transportmittel können eingespart werden.

Aus dem einfachen Konzept ergibt sich auch, daß die Spindeln in höherer Stückzahl kostengünstiger in größeren Serien gebaut werden können.

Durch den erfindungsgemäßen Vorschlag ist es möglich, daß bei einer Mehrachsbearbeitung des Werstückes die verschiedenen Bearbeitungsachsen zwischen der Bewegungsrichtung der Werkzeugspindel und der Bewegungsrichtung des Werkstückes verteilt sind. Hieraus eröffnet sich die Möglichkeit, eine Vielzahl von Achsen, Bewegungsrichtungen beziehungsweise Bearbeitungsrichtungen der Bearbeitungsanlage hochdynamisch bei geringem Aufwand, zu gestalten. Dies sind aber gerade die Vorzüge von Bearbeitungszentren, die flexibel einsetzbar sind. Die erfindungsgemäßen Bearbeitungsanlagen (zum Beispiel in der bisherigen Bauweise einer normalen Transferstraße) werden oftmals für komplexe Bearbeitungsprozesse entwickelt und erlauben daher kaum eine Variabilität bei der Nutzung aufgrund der sehr speziellen Ausrichtung. Der erfindungsgemäße Vorschlag erlaubt es aber auch in komplexeren Bearbeitungsanlagen eine Flexibilität wie in einem Bearbeitungszentrum vorzusehen. Der erfindungsgemäße Vorschlag verbindet dabei überraschend die Vorzüge eines flexibel arbeitenden Bearbeitungszentrums mit Möglichkeiten einer Transferstraße oder sonstigen Bearbeitungsanlagen, die insbesondere für komplexe Bearbeitungsabfolgen eingesetzt werden. Im Ergebnis wird dadurch eine Bearbeitungsanlage erreicht, auf der auch kleinere Serien kostengünstig realisiert werden können und gleichzeitig eine hohe Flexibilität bei der Umrüstung erlauben.

Ein besonderer Vorzug der Erfindung ist, daß die Bewegungsrichtung des Werkstückes, insbesondere während seiner Bearbeitung, parallel oder annähernd parallel zu der Transportrichtung des Werkstückes ist. Neben der Reduzierung des Aufwandes für eine Mehrachsige Bearbeitung, obwohl eine weiterhin sehr komplexe Bearbeitungsmöglichkeit verbleibt, nützt die Erfindung hier einen weiteren Synergieeffekt aus. In Bearbeitungsanlagen wie Transferstraßen oder Schiebetischmaschinen ist bereits eine Transportachse notwendig. Diese Transportachse beschreibt die Bewegung des Werkstückes zwischen den verschiedenen Bearbeitungsstationen oder Werkzeugspindeln. Das Werkstück wird also bereits bewegt. Genau diese Bewegung wird jetzt ausgenützt, um den erfindungsgemäßen Gedanken umzusetzen. Das Werkstück wird während der Bearbeitung mit dem gleichen Mittel bewegt, das nach Abschluß der Bearbeitung den Transport des Werkstückes zur nächsten Bearbeitungsstation übernimmt. Dabei werden entsprechende Maßnahmen ergriffen, damit eine hochgenaue Bearbeitung entlang dieser Bewegungsachse sicher gestellt ist.

Des Weiteren ist vorgesehen, daß sich das Werkstück dreht und/oder auf einem Kreuzschlitten gelagert in einer Ebene bewegt und/oder sich rechtwinklig zur Transportrichtung bewegt. Zum Beispiel ist vorgesehen, daß das Werkstück um eine horizontale oder vertikale Achse drehbar ist. Dies erlaubt zum einen ein entsprechendes Verschwenken während der Bearbeitung, wie auch ein Verschwenken zur Positionierung bei einem neuen Bearbeitungsschritt. Der zum Beispiel stehend oder hängend geführte Vorrichtungswagen, der das Werkstück transportiert, besitzt ein entsprechendes Dreh- oder Schwenklager für eine entsprechende Positionierung des Werkstückes. Der erfindungsgemäße Vorschlag ist nicht auf eine Bewegung des Werkstückes während einer Bearbeitung parallel zu seiner Transportrichtung beschränkt. Durch entsprechende Lagerung des Werkstückes sind verschiedene Bearbeitungsrichtungen beziehungsweise Bearbeitungsachsen möglich.

Das Werkstück wird hierbei oben, unten und/oder seitlich gehalten beziehungsweise bearbeitet. Die Bearbeitungsanlage erlaubt eine sehr effektive Bearbeitung des Werkstückes, das, je nach dem wie das Werkstück gehalten wird, eine entsprechend optimierte Bearbeitung erlaubt.

Es ist vorgesehen, daß das Werkstück auf einem Vorrichtungswagen als Transportmittel aufgespannt ist. Der Vorrichtungswagen läuft auf der Transportbahn. Das Werkstück wird auf den Vorrichtungswagen durch die Bearbeitungsanlage transportiert, wobei der Vorrichtungswagen sich auch während der Bearbeitung des Werkstückes bewegt. Diese Ausgestaltung führt zu einem unmittelbaren Vorteil der erfindungsgemäßen Idee, da die Transportachse der Bewegungsachse gleichgesetzt beziehungsweise parallel ist. Dabei ist die Anordnung eines Werkstückes auf einem Vorrichtungswagen zum Transport durch eine Bearbeitungsanlage wie Transferstraßen hinlänglich bekannt, der konstruktive Aufwand zur Realisierung des erfindungsgemäßen Vorschlages also sehr gering.

Alternativ, ebenfalls erfindungsgemäß, ist vorgesehen, daß auf der Transportbahn eine Transporteinheit vorgesehen ist, welche eine Positioniereinheit für das Halten des Werkstückes aufweist und sich die Positioniereinheit und/oder die Transporteinheit während der Bearbeitung des Werkstückes bewegt. Allgemein gesprochen verrichtet natürlich auch der Vorrichtungswagen die Aufgabe der Transporteinheit, nämlich ein Transport des Werkstückes durch die Bearbeitungsanlage.

Es ist aber auch möglich, das erfindungsgemäße Konzept in einer anderen Art und Weise zu realisieren. In einer erfindungsgemäßen Variante ist vorgesehen, daß das Werkstück an der Bearbeitungsstation von der Transportbahn durch eine Transporteinheit aufgenommen wird, und die Transporteinheit das Werkstück auch in der Bearbeitungsstation bewegt. Zum Beispiel ist vorgesehen, daß die Transporteinheit nur für eine Bewegung in der Bearbeitungsstation vorgesehen ist, wobei hierbei zu beachten ist, daß eine Vielzahl von Spindeln parallel nebeneinander oder versetzt an der Bearbeitungsstation vorgesehen sind und natürlich eine Transporteinheit vorgesehen ist, um das Werkstück an der jeweils gewünschten Bearbeitungsspindel zu positionieren. Dabei ist es möglich, daß die Transporteinheit auch dann während der Bearbeitung des Werkstückes das Werkstück bewegt oder aber dies von einer zusätzlichen Positioniereinheit erbracht wird. Bei dieser Alternative erledigt die Transporteinheit nicht den Transport des Werkstückes durch die gesamte Bearbeitungsanlage, sondern gegebenenfalls nur durch eine Station. Ein anderes Transportmittel erbringt dann diesen Transport.

Es ist dabei erfindungsgemäß vorgesehen, daß sowohl der Vorrichtungswagen wie auch die Transporteinheit eine Positioniereinheit für das Halten des Werkstückes aufweist. Es ist zum Beispiel vorgesehen, daß an dem Vorrichtungswagen nicht nur die Bewegung parallel zur Transportrichtung für eine Werkstückbearbeitung abgeleitet werden soll. Das Werkstück wird auf einer Positioniereinheit aufgespannt und die Positioniereinheit, je nach dem wie diese ausgestaltet ist, erlaubt weitere Linearoder Drehbewegungen.

Des Weiteren ist erfindungsgemäß vorgeschlagen, daß eine erste Transporteinheit vorgesehen ist, die das Werkstück durch die Bearbeitungsanlage transportiert und eine Umsetzeinheit in der Bearbeitungsstation das Werkstück von der ersten Transporteinheit in eine zweite Transporteinheit, und nach einer Bearbeitung zurück, umsetzt. Hierdurch kann ein entsprechend komplexes Bewegungs- beziehungsweise Transportsystem realisiert werden. Verhältnismäßig einfach ausgestaltete erste Transporteinheiten übernehmen den Transport der Werkstücke zwischen den Bearbeitungsstationen einer Bearbeitungsanlage. In den Bearbeitungsstationen befinden sich zweite Transporteinheiten, die gegebenenfalls auch mit Positioniereinheiten oder sonstigen Mitteln ausgestaltet sind und Bearbeitung des Werkstückes entsprechend unterstützen. Diese zweiten Transporteinheiten können komplexer aufgebaut sein, günstigerweise sind diese der jeweiligen Funktionalität der Bearbeitungsstation optimal angepaßt. Zum Beispiel erlaubt die zweite Transporteinheit auch eine hochexakte Positionierung beziehungsweise Bewegung des Werkstückes während der Bearbeitung durch das Werkzeug. Zur Verbindung zwischen diesen beiden verschiedenen Transporteinheiten ist eine Umsetzeinheit vorgesehen, die das Werkstück entsprechend zwischen den beiden Transporteinheitentypen übergibt.

Die erfindungsgemäße Bearbeitungsanlage ist zum Beispiel als eine Transferstraße mit einer Mehrzahl hintereinander angeordneter Bearbeitungsstationen ausgebildet. Typischerweise wird bei einer Transferstraße die Transportrichtung der Werkstücke unidirektional, also einem Einbahnstraßenprinzip folgend, ausgebildet. In der Bearbeitungsstation könnte gegebenenfalls hiervon abgewichen werden, das bedeutet bei einer entsprechenden Positionierung kann das Werkstück auch zurückgezogen werden, es erfolgt aber in der Regel kein Zurücktransport des Werkstückes in eine davorliegende Bearbeitungsstation. Das erfindungsgemäße Konzept läßt sich aber auch in einer als Schiebetischmaschine beschriebenen Ausgestaltung einsetzen, bei welcher einige wenige, zum Beispiel zwei oder drei, Bearbeitungsstationen durch den Schiebetisch verbunden sind. Der Schiebetisch fungiert hierbei als Transporteinheit oder Vorrichtungswagen im Sinne der Erfindung, wobei die Schiebetischmaschine prinzipiell eine bidirektionale Bearbeitung zuläßt, das bedeutet ein in der Schiebetischmaschine eingeführtes Werkstück wird auch nach einer Rückwärtsbewegung von der ersten Bearbeitungsstation nochmals entsprechend bearbeitet.

Die Erfindung betrifft nicht nur eine Bearbeitungsanlage wie vor beschrieben, sondern beschreibt in gleicher Weise eine Transferanlage, bestehend aus einem Einführ- und einem Ausführband für die Werkstücke und einem Roboter, der die Werkstücke von dem Einführband aufnimmt und auf eine Transportbahn einer Bearbeitungsanlage gibt. Nach Abschluß der Bearbeitung übernimmt der Roboter das Werkstück von der Transportbahn und gibt es zurück auf die Auslaufbahn. Die Transferanlage, wie hier beschrieben, besteht zum Beispiel aus mehreren Transferstraßen, wobei eine U-förmige oder ringartige Ausgestaltung der Transferstraße erlaubt, daß das Werkstück wieder an den Startpunkt der Transferstraße am Ende zurückgeführt wird und dort von dem Roboter, der diesbezüglich eine Mehrzahl von Transferstraßen ver- und entsorgt, wieder aus der Transportbahn heraus auf das Ausführband gesetzt werden kann.

Einführ- und Ausführband sind hier nicht nur als einfache Fließbänder, sondern allgemein als Transportsystem für Werkstücke für die industrielle Bearbeitung zu sehen, dabei ziehen zum Beispiel Palettenfördersysteme auf entsprechend intelligenten Rollen oder Förderanlagen und so weiter.

Vorzüge dieser erfindungsgemäßen Variante liegt darin, daß durch den erfindungsgemäßen Vorschlag verhältnismäßig platzsparend eine Vielzahl von Bearbeitungsstationen realisiert werden können, wodurch es prinzipiell möglich ist, auf kleinem Raum eine höhere Zahl von Bearbeitungsstationen anzuordnen und daher auch Transferstraßen verhältnismäßig platzsparend anzuordnen und durch einen Roboter eine Vielzahl solcher Transferstraßen mit Werkstücken zu be- und entsorgen. Dieser Vorzug leitet sich ab aus der Aufteilung der für die Werkstückbearbeitung notwendigen Bewegungsachsen zwischen Achsen, die die Spindel erbringt und Achsen, die das Werkstück während der Bearbeitung erbringt. Durch die Einsparung der notwendigen Bewegungsachsen an den Spindeln erlaubt die Erfindung eine platzsparende Realisierung der Spindeln und damit auch die Realisierung eines neuen Anlagentypes einer Transferanlage wie beschrieben.

In der Zeichnung ist die Erfindung schematisch dargestellt. Es zeigen:
- Fig. 1, 4, 5, 6, 8: in einer Ansicht in Transportrichtung die erfindungsgemäße Bearbeitungsanlage;
- Fig. 2, 3: in einer Draufsicht zwei Varianten der erfindungsgemäßen Transferanlage;
- Fig. 7: in einer Draufsicht eine als Schiebetischmaschine ausgestaltete erfindungsgemäße Bearbeitungsanlage;
- Fig. 9: in einer Seitenansicht die erfindungsgemäße Bearbeitungsanlage und
- Fig. 10: in einer dreidimensionalen Ansicht die erfindungsgemäße Bearbeitungsanlage.

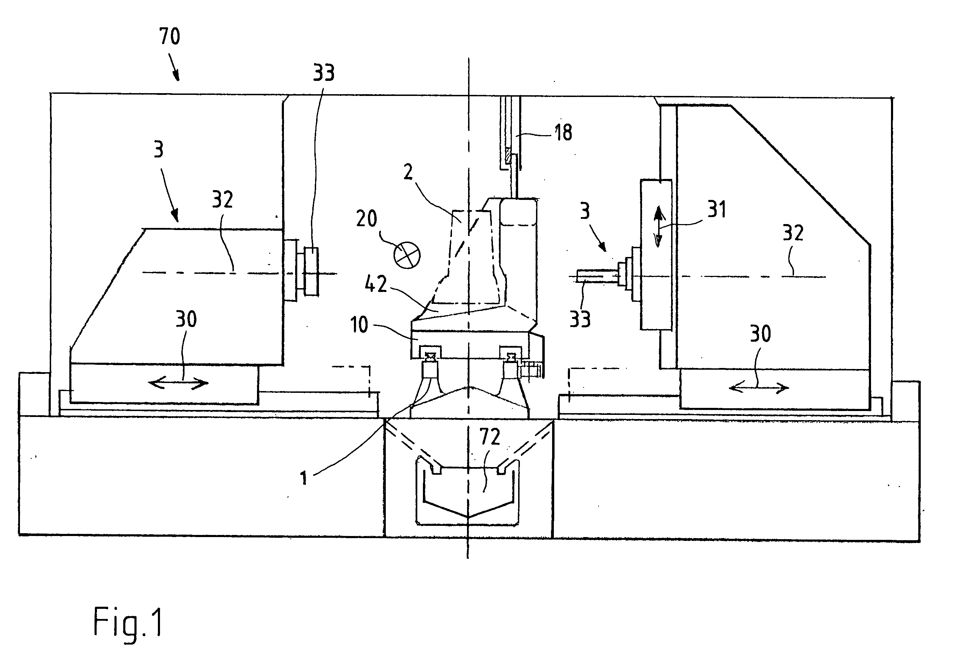

In Fig. 1 ist die erfindungsgemäße Bearbeitungsanlage 7 schematisch dargestellt. In der hier abgebildeten Ansicht ist eine Bearbeitungsstation 70 zu erkennen. Das Werkstück 2 ist auf einem Vorrichtungswagen 10 aufgespannt.

In der Bearbeitungsstation 70 sind links und rechts neben dem Werkstück 2 mindestens eine oder eine Vielzahl von Werkzeugspindeln 3 vorgesehen. Die Achse der Werkzeugspindeln ist mit 32 gekennzeichnet.

Die Werkzeugspindeln 3 sind dabei gegebenenfalls in Bearbeitungseinheiten zusammengefaßt, die gleichzeitig eine größere Anzahl von Werkzeugspindeln 3 aufnehmen. In Fig. 1 ist auf der linken Seite gezeigt, daß die Werkzeugspindel (oder auch Bearbeitungseinheit, was insofern gleichbedeutend ist) längs einer horizontalen Achse entlang des Doppelpfeiles 30 beweglich ist. Diese Bewegungsmöglichkeit steht senkrecht zu der Bewegung des Werkstückes 2. Eine Höhenverstellbarkeit der Lage der Rotationsachse 32 der Werkzeugspindel ist hier nicht vorgesehen.

Eine solche vertikale Verschiebbarkeit ist in der rechten Werkzeugspindel 3 (beziehungsweise Bearbeitungseinheit) vorgesehen, bei welcher die Führung der Werkzeugspindel noch in einem vertikal verschiebbaren Schlitten gelagert ist, der entlang des Doppelpfeiles 31 beweglich ist.

Als Bearbeitungswerkzeuge 33 können alle bekannten Werkzeuge eingesetzt werden, die für eine spanabhebende Bearbeitung Verwendung finden. Hierzu zählen zum Beispiel Fräser, Flächenfräser, Bohrer und so weiter.

Da gemäß dem erfindungsgemäßen Vorschlag die Bearbeitungsachsen 30, 31 der Werkzeugspindeln 3 einerseits und die Bewegung des Werkstückes 2 andererseits (durch das Kreuz im Kreis 20 gekennzeichnet) aufgeteilt ist, verringert sich der konstruktive Aufwand für die Realisierung der Werkzeugspindeln 3 beträchtlich. Es ist möglich, die Bearbeitungsspindeln auf einfachere Konsolen zu lagern, ohne die Flexibilität oder Komfortabilität einer entsprechenden Bearbeitung einzubüßen.

Die dritte Bearbeitungsachse beziehungsweise -richtung liegt in der Fig.1 gezeigten Ausgestaltung rechtwinklig zur Zeichenebene und ist durch das Kreuz im Kreis 20 gekennzeichnet.

Im Grundbett der Maschine ist eine Spülrinne 72 oder ein Späneförderer gelagert. Auf der Transportbahn 1 ist ein Schlitten auf entsprechenden Führungsbahnen beweglich gelagert, der Schlitten trägt eine Spannvorrichtung 42 und ist zum Beispiel als Vorrichtungswagen ausgebildet.

Die rechte Spindel 3 ist mit einem horizontalen Schlitten (Doppelpfeil 31) und mit einem vertikalen Schlitten (Doppelpfeil 30) ausgestattet. Pro Bearbeitungsstation können mehrere auf gleicher Seite hintereinander angeordnete Spindeln vorgesehen sein.

Der Schlitten beziehungsweise Vorrichtungswagen wird zum Beispiel über einen Servomotor mit Ritzel und Zahnstange an der Transportbahn angetrieben. Der Schlitten beziehungsweise Vorrichtungswagen 10 erhält seine Energie über eine Stromschiene 18, welche oberhalb, an der Seite oder unterhalb der Transportbahn 1 angebracht werden kann. Der Servomotor mit Geber und Umrichter befindet sich in dem Vorrichtungswagen 10. Alternativ kann dieser Schlitten auch mit einem Linearantrieb ausgeführt sein oder mit der Technik einer Magnetschwebebahn.

Durch entsprechende Ausgestaltung des Antriebes ist auch eine entsprechende hochgenaue Positionierung und Bewegung des Vorrichtungswagens 10 während der Bearbeitung möglich. Dies kann durch entsprechende hochgenaue Führungen und Antriebe erreicht werden, die nur in dem Bereich der Bearbeitung in der Bearbeitungsstation 70 wirksam sein müssen. Alle anderen Schlitten, insbesondere der Werkzeugspindeln 3, sind mit Linearmotoren, mit Kugelrollspindeln und Servomotoren, durch einen Zylinder mit Servohydraulik oder Servopneumatik und so weiter angetrieben. Aufgrund des geringen Aufwandes für die Realisierung der Werkzeugspindeln ist es auch möglich, hochdynamische, also schnellbewegende Schlitten für die Werkzeugspindeln 3 zu realisieren.

Der Vorschlag nach Fig. 1 ist darauf abgestellt, daß die Bewegung des Werkstückes auf einem Vorrichtungswagen 10 zum einen zum Transport des Werkstückes durch die Bearbeitungsanlage dient und zum anderen, gleichzeitig auch als Bewegungsachse 20 bei einer entsprechenden Bearbeitung durch eine Werkzeugspindel 3 dient.

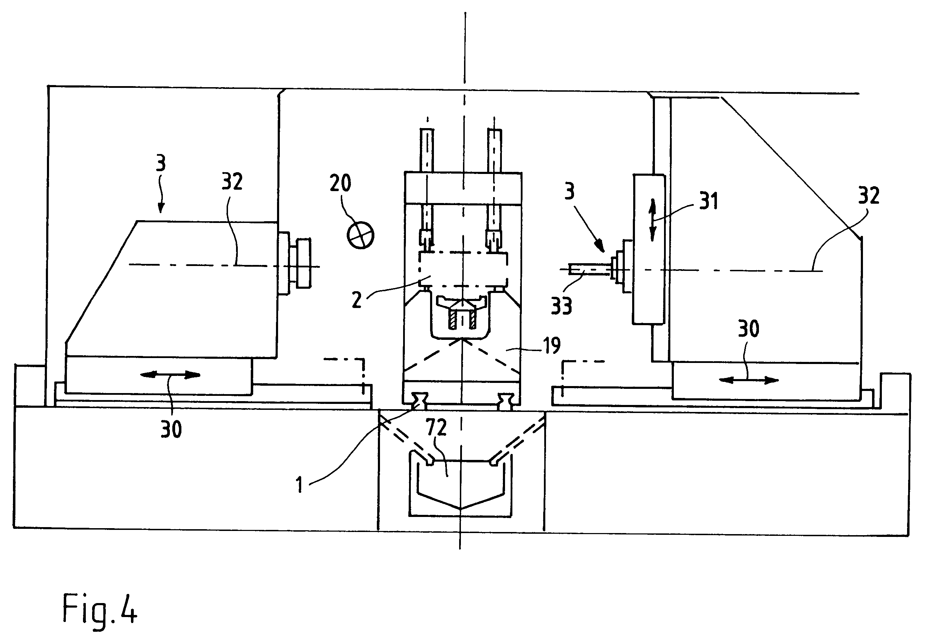

In Fig. 4 ist anstelle eines Vorrichtungswagens 10 ein Schlitten 19 vorgesehen, der auf der Transportbahn 1 gelagert ist, und sich nur im Stationsbereich bewegt und die Spannvorrichtung trägt. Das Werkstück wid also in jeder Station gespannt und entspannt und über einen Hub-Schritt-Transfer weiter getaktet.

Die Vorschläge nach Fig. 1 und 4 sind darauf abgestellt, daß das Werkstück von beiden Seiten gleichzeitig bearbeitet werden kann. Allerdings ist hierzu eine konstruktive Abstimmung des zweiten Bearbeitungskopfes erforderlich. Will man diese Abhängigkeit vermeiden, dann müssen die beiden Bearbeitungsköpfe zeitlich nacheinander bearbeiten.

Bei der Ausgestaltung mit einem Vorrichtungswagen 10 können in die Zwischenräume zwischen den Bearbeitungsstationen 70 Prüfeinrichtungen gebaut werden und die automatisch angetriebenen Vorrichtungswagen 10 müssen entsprechen positioniert anhalten. Wenn nur das Werkstück mittels Hub-Schritt-Transfer in die nächste Station transportiert wird, können zwischen den Bearbeitungsstationen 70 Leerstationen mit Prüfeinrichtungen integriert werden.

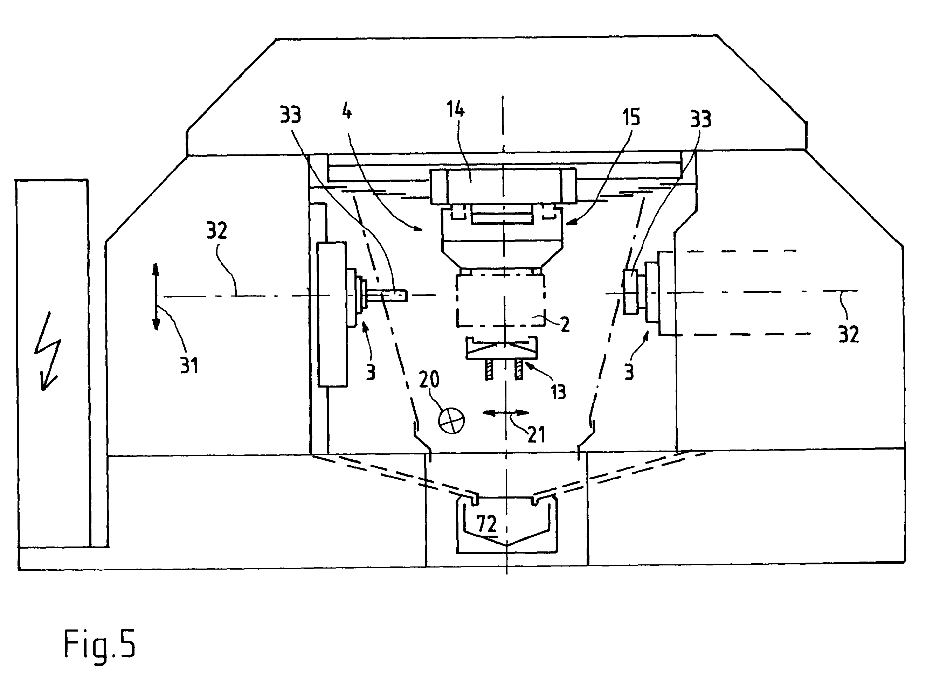

In Fig. 5 ist die erfindungsgemäße Lösung in einem anderen Konzept eingebunden. Das Werkstück bewegt sich in der Station in zwei Richtungen und die linke Spindel nur noch in einer vertikalen Richtung 31. Die rechte Werkzeugspindel 3 benutzt keine bewegliche Achse mehr, sie ist raumfest. Das Werkstück 2 befindet sich zwischen den beiden Bearbeitungsspindeln 3. Die auf den Werkzeugspindeln sitzenden Bearbeitungswerkzeuge 33 können in diesem Ausführungsbeispiel nur nacheinander zum Einsatz kommen und sind immer unabhängig voneinander.

Das Werkstück 2 wird zum Beispiel über eine erste Transporteinheit 13 in die Bearbeitungsstation 70 hereintransportiert. Die erste Transporteinheit 30 unterstützt dabei das Werkstück 2 von unten. In der Bearbeitungsstation wird das Werkstück 2 auf eine zweite, portalartige Transporteinheit 14 übergeben, die mit einer Kreuzschlittenführung 15 ausgestattet ist.

Durch die Ausbildung eines Kreuzschlittens 15 erfährt das Werkstück nunmehr eine zweite Bewegungsachse, die sich entlang den Führungen der Kreuzschlitten ergibt. Diese sind mit dem Kreuz im Kreis 20 und dem Doppelpfeil 21 angedeutet. In diesem Konzept ist es nun möglich, an den Bearbeitungsspindeln 3 nur noch eine vertikale Bewegung 31 vorzusehen, um eine dreiseitige beziehungsweise dreiachsige Bearbeitung zu erlauben.

Die Kreuzschlittenführung 15 befindet sich dabei an einer Traverse oberhalb des Werkstückes 2 beziehungsweise der Spindeln 3.

Die hier dargestellte Ausgestaltung der zweiten Transporteinheit 14 entspricht auch der Anordnung einer Positioniereinheit 4, wobei die Positioniereinheit 4 hier als Kreuzschlitten 15 ausgebildet ist, aber auch nur einen Schlitten (in Förderrichtung) oder einen Querschlitten (rechtwinklig zur Förderrichtung) aufweisen kann. Auch ist die Anordnung eines Rundtisches möglich.

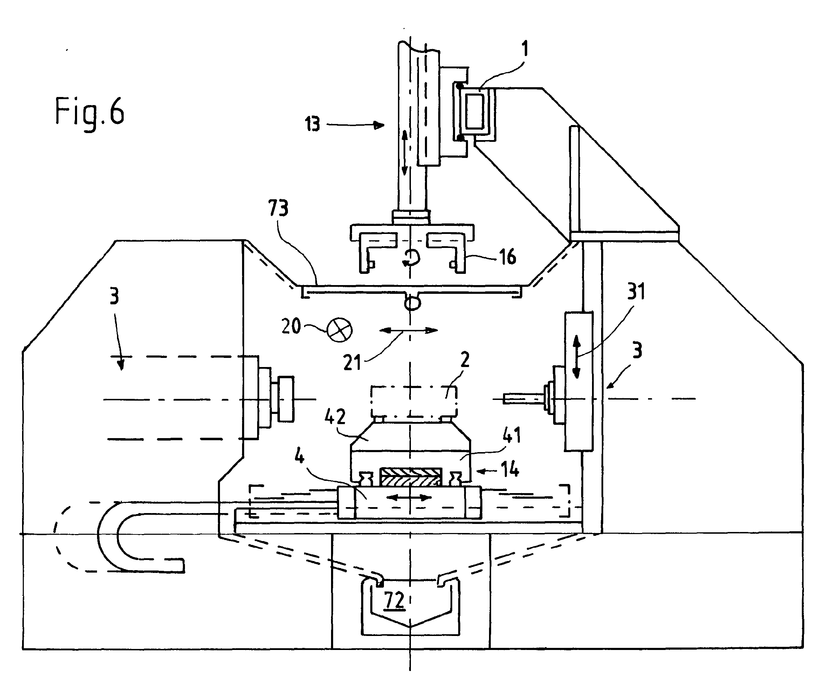

Ähnlich wie der Vorschlag nach Fig. 5 betrifft auch der Vorschlag nach Fig. 6 zwei Transporteinheiten. Das Werkstück wird über die erste Transporteinheit 13, die auf der Transportbahn 1 beweglich gelagert ist, an die Bearbeitungsstation herangeführt und über eine Türe 73 von oben in die Station auf die zweite Transporteinheit 14 abgesetzt. Diese zweite Transporteinheit 14 ist ebenfalls als oder mit einer Positioniereinheit 4 ausgestattet. Die Positioniereinheit 4 trägt einen Kreuzschlitten 41 und erlaubt eine Positionierung und/oder Bewegung des Werkstückes 2 entlang zweier Raumachsen 20, 21, die hier horizontal orientiert sind. Die vertikale Achse wird zum Beispiel von der rechten Spindel 3 entlang des Doppelpfeiles 31 erbracht.

In dem hier ausgeführten Beispiel ist die Transportbahn 1 als Hängebahn ausgebildet. In den anderen Beispielen, insbesondere bei Fig. 1, ist sie als Schienenbahn ausgebildet.

An der ersten Transporteinheit 13 befindet sich eine Umsetzeinrichtung 16, die als Greifer ausgebildet ist, welcher das Werkstück hält und in die zweite Transporteinheit übergibt beziehungsweise von dieser nach der Bearbeitung wieder herausnimmt.

In dem in Fig. 6 gezeigten Ausführungsbeispiel wird das Werkstück 2 von unten her gelagert und unterstützt. Es ist möglich, einen Rundtisch vorzusehen, dessen Rotationsachse vertikal oder horizontal orientiert ist, und so eine zusätzliche Positioniermöglichkeit und/oder Bearbeitungsmöglichkeit erlaubt. Da das Werkstück entlang mehrer Achsen positionierund bewegbar ist, können feste Konsolen an den Bearbeitungsspindeln, insbesondere für das Fräsen von Flächen, vorgesehen werden, um die hohen Kräfte bei solchen Bearbeitungen zuverlässig abfangen zu können. Der Transfer der Werkstücke erfolgt von oben und gegebenenfalls kann der Greifer 16 um eine horizontale Achse drehbar sein, um das Werkstück optimal auf der Befestigungsvorrichtung abzugeben. Diese ist zum Beispiel mit einer Spannvorrichtung 42 ausgestattet.

Das erfindungsgemäße Konzept erlaubt auf der gleichen Fläche eine höhere Anzahl von Bearbeitungsspindeln anzuordnen. Hierdurch wird die Flexibilität beziehungsweise Einsatzmöglichkeit einer solchen Bearbeitungsanlage nicht reduziert, dadurch ist es möglich den konstruktiven Aufwand und auch den Aufwand für den Transport solcher Bearbeitungsanlagen deutlich zu reduzieren.

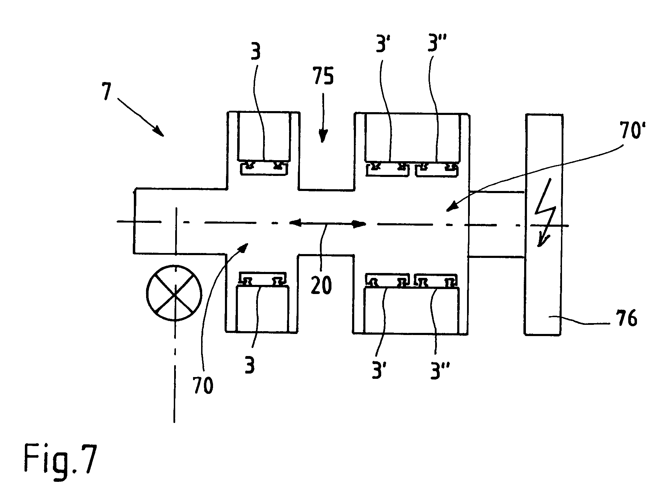

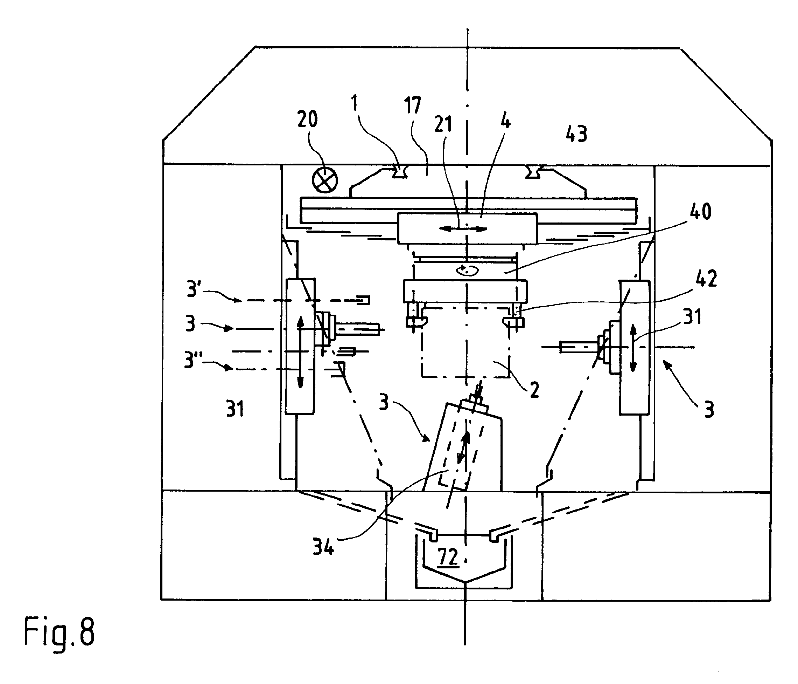

In Fig. 7 ist ein Ausführungsbeispiel der erfindungsgemäßen Bearbeitungsanlage in Form einer Schiebetischmaschine 75 gezeigt. Die Ausgestaltung nach Fig. 7 korrespondiert mit der Ansicht nach Fig. 8. Die Schiebetischmaschine 75 zeichnet sich in diesem Ausführungsbeispiel nur durch zwei Bearbeitungsstationen 70 aus. In der ersten sind zwei, in der zweiten insgesamt vier Vertikalschlitten mit Bearbeitungsspindeln 3, 3', 3'' vorgesehen. Der Schiebetisch 17 (in Fig. 7 nicht gezeigt) verfährt regelmäßig zwischen den beiden Bearbeitungsstationen 70, 70'. Das Be- und Entladen erfolgt zum Beispiel manuell oder automatisch auf der in der Zeichnung linken Seite. Auf der gegenüberliegenden Seite befindet sich der Elektrokasten 76.

Die in Fig. 8 gezeigte Ausgestaltung hängt das Werkstück 2 an den Schiebetisch 17 unten auf, es ist natürlich auch eine Ausgestaltung andersherum möglich, das heißt derart, daß das Werkstück 2 auf dem Schiebetisch 17 aufliegt. Der Schiebetisch 17 ist entlang des Kreuzes im Kreis 20 (rechtwinklig zur Zeichenebene) befahrbar und beschreibt damit schon eine mögliche Bearbeitungsachse. Der Schiebetisch 17 ist auch mit einem Querschlitten 43 ausgestattet und erlaubt daher eine Bewegung entlang der horizontalen Achse 21. Das Werkstück 2 wird über eine Spannvorrichtung 42 gehalten. Die Werkzeugspindeln 3 sind nur vertikal entlang des Doppelpfeiles 31 zu verfahren, wiederum werden zwei Achsen durch die Bewegung des Werkstückes 2 selber und die dritte Achse durch die Spindel erbracht.

Zusätzlich ist noch eine schräg angeordnete Pinole 34 vorgesehen, die unterhalb schräg Bohrungen in das Werkstück 2 einbringen kann.

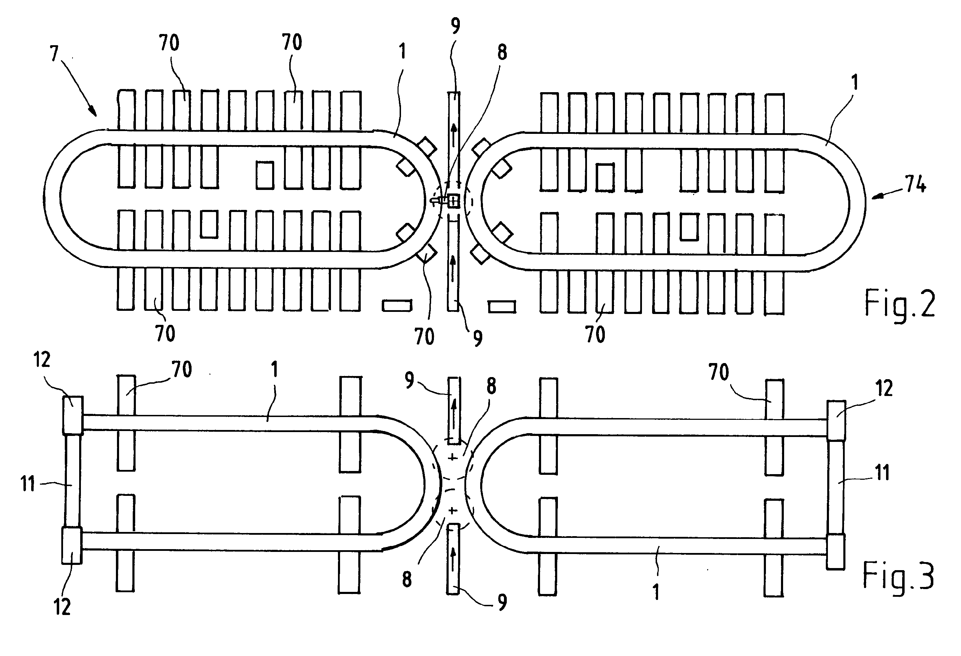

In Fig. 2 und 3 ist eine Transferanlage angedeutet, die ein Einführ- und eine Ausführband 9 für die Werkstücke aufweisen sowie einen (Fig. 2) oder zwei (Fig. 3) Roboter 8, der die Werkstücke von dem Einführband 9' aufnimmt, in die Transportbahn 1 gibt und dort durch eine erfindungsgemäße Bearbeitungsanlage, insbesondere eine Transferstraße 74, wie zum Beispiel oben beschrieben, bewegt wird.

In Fig. 2 ist gezeigt, daß die Transferstraße 74 ringförmig oder U-förmig geschlossen ausgebildet ist. Ein auf der Transportbahn 1 umfahrender Vorrichtungswagen trägt das Werkstück zu den jeweiligen Bearbeitungsstationen 70 beziehungsweise den einzelnen Spindeln.

In Fig. 3 ist die Transferstraße U-förmig ausgebildet, wobei die Schenkel des U's durch eine Hochtrasse 11 verbunden sind. Um die Hochtrasse 11 zu erreichen, sind Aufzüge 12 an den Enden des U's vorgesehen. Die Ausgestaltung mit einer Hochtrasse 11 erlaubt eine bessere Zugänglichkeit gerade im Innenbereich der Bearbeitungsanlage, zum Beispiel für Wartungs- oder Inspektionszwecke.

Für eine höhere Be- beziehungsweise Entladegeschwindigkeit des Transportbandes 1 sind in diesem Ausführungsbeispiel zwei Roboter 8 vorgesehen.

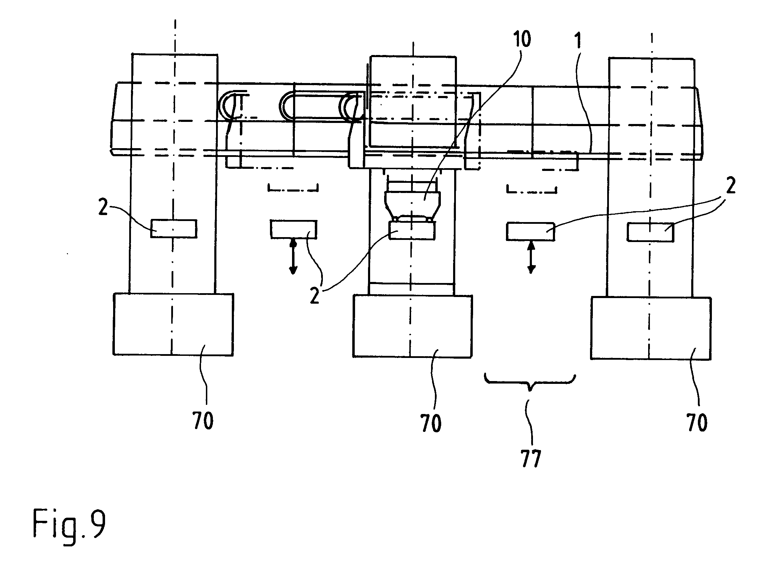

In Fig. 9 ist eine weitere, erfindungsgemäße Variante gezeigt. Ausschnittsweise sind von einer Bearbeitungsanlage (zum Beispiel einer flexiblen Transferstraße) drei Bearbeitungsstationen 70 hintereinander angeordnet. Diese werden durch eine Transportbahn 1 verbunden. An der Transportbahn 1 wird hängend der Vorrichtungswagen 10 bewegt, der das Werkstück 2 zum einen entlang der Transportbahn 1 und zum anderen auch in der jeweiligen Bearbeitungsstation 70 bewegt.

Es besteht nunmehr die Möglichkeit, die Vorrichtungswagen zum Beispiel über eine Stromschiene mit Energie zu versorgen und so endlos umlaufend auszugestalten. Es ist aber auch möglich, die Vorrichtungswagen mittels einer Schleppkette mit Energie zu versorgen und zwischen den Bearbeitungsstationen 70 Zwischenablagen 77 vorzusehen, bei welchen die Werkstücke 2 abgelegt werden. In diesem Ausführungsbeispiel würde dann der Vorrichtungswagen 10 das Werkstück bei einer ersten Zwischenablage aufnehmen, durch die Bearbeitungsstation 70 transportieren und bei der nachfolgenden Zwischenablage 77 wieder ablegen. Der Vorrichtungswagen der nächstbenachbarten Bearbeitungsstation übernimmt dann den weiteren Transport des Werkstückes. Diese Variante zeigt aber auch, daß sowohl für den Transport des Werkstückes zwischen den Bearbeitungsstationen in der Bearbeitungsanlage, wie auch für den Transport des Werkstückes in der Bearbeitungsstation 70 der Vorrichtungswagen 10 dient.

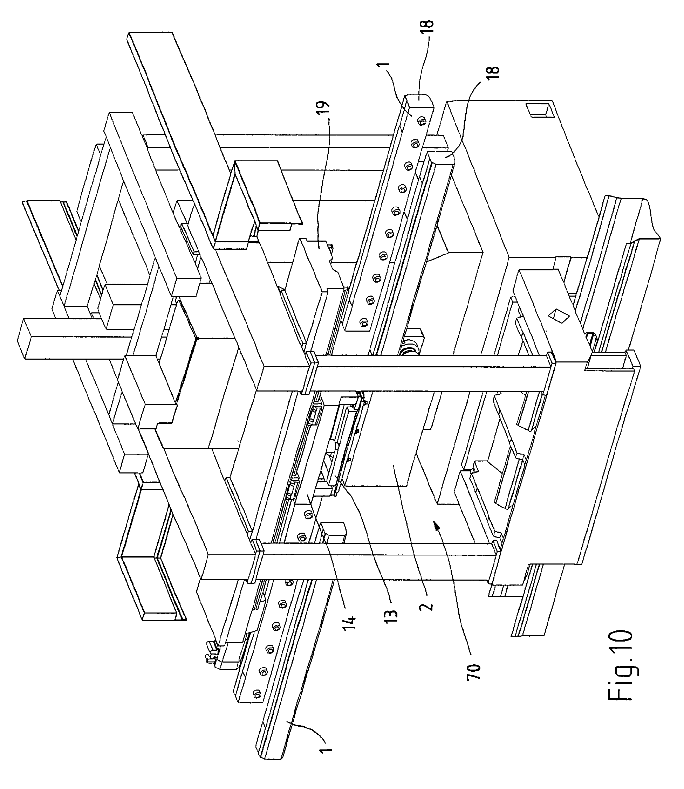

In Fig. 10 ist eine weitere erfindungsgemäße Variante gezeigt. Das Werkstück 2 wird hierbei von einer ersten Transporteinheit 13 zu der Bearbeitungsstation 70 herantransportiert. Die Transportbahn 1 besteht hierbei wiederum aus einer oben verlaufenden Rollenbahn, wobei die Transporteinheit 13 das Werkstück 2 hängend aufnimmt, das heißt, das Werkstück 2 hängt unterhalb der Transporteinheit 13 und zwischen den beiden Holmen 18 der Transportbahn 1. Die Transportbahn 1 kann hierbei zum Beispiel als Friktionsrollenbahn ausgebildet sein. Die Transportbahn 1 ist nicht durchgehend. Im Bereich der Bearbeitungsstation 70 ist eine zweite Transporteinheit 14 vorgesehen, die den Transport und die Positionierung beziehungsweise Bewegung des Werkstückes 2 in der Bearbeitungsstation 70 übernimmt. Sie besitzt eine eigene Führung 19, die im Wesentlichen parallel zur Transportrichtung auf der Transportbahn 1 ist. Beide Transporteinheiten 13, 14 sind für den jeweiligen Zweck optimiert. Die außenliegende Transportbahn 1 benötigt keine hohe Positioniergenauigkeit wie die Transporteinheit 14.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in de Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Bearbeitungsanlage mit mindestens einer Transportbahn, die ein Werkstück mehreren Bearbeitungsstationen zuführt und in der Bearbeitungsstation mindestens eine Werkzeugspindel vorgesehen ist und sich das Werkstück während einer Bearbeitungsdauer in der Bearbeitungsstation befindet und hierbei von zumindest einer Werkzeugspindel mit gegebenenfalls spanabhebenden Werkzeugen entlang mindestens einer Achse eine Bearbeitung erfährt, **dadurch gekennzeichnet, daß** sich das Werkstück (2) während zumindest eines Teils der Bearbeitungsdauer bewegt.

2. Bearbeitungsanlage nach Anspruch 1, **dadurch gekennzeichnet, daß** während der Bearbeitungsdauer das Werkzeug auf das Werkstück (2) einwirkt und hierbei das Werkstück (2) bewegt wird.

3. Bearbeitungsanlage nach einem oder beiden der vorhergehenden Ansprüche, **dadurch gekennzeichnet, daß** die Bearbeitungsstation mindestens zwei Werkzeugspindeln aufweist und das Werkstück (2) während der Bearbeitungsdauer von der ersten zur zweiten Werkzeugspindel bewegt wird.

4. Bearbeitungsnlage nach einem oder mehreren der vorhergehenden Ansprüche, **dadurch gekennzeichnet, daß** für den Transport des Werkstückes (2) zwischen den Bearbeitungsstationen ein Transportmittel dient und das Transportmittel das Werkstück (2) auch in der Bearbeitungsstation bewegt.

5. Bearbeitungsnlage nach einem oder mehreren der vorhergehenden Ansprüche, **dadurch gekennzeichnet, daß** bei einer Mehrachsbearbeitung des Werkstückes (2) die verschiedenen Bearbeitungsachsen zwischen den Bewegungsrichtungen (30, 31) der Werkzeugspindel (3) und der Bewegungsrichtung (20, 21) des Werkstückes (2) verteilt sind.

6. Bearbeitungsnlage nach einem oder mehreren der vorhergehenden Ansprüche, **dadurch gekennzeichnet, daß** die Bewegungsrichtung (20) des Werkstückes (2) parallel oder annähernd parallel zu der Transportrichtung des Werkstückes (2) ist.

7. Bearbeitungsnlage nach einem oder mehreren der vorhergehenden Ansprüche, **dadurch gekennzeichnet, daß** sich das Werkstück (2) dreht und/oder sich auf einem Kreuzschlitten (15, 41) gelagert in einer Ebene bewegt und/oder sich rechtwinklig zur Transportrichtung bewegt.

8. Bearbeitungsanlage nach einem oder mehreren der vorhergehenden Ansprüche, **dadurch gekennzeichnet, daß** das Werkstück (2) von oben, unten und/oder seitlich gehalten und/oder bearbeitet wird.

9. Bearbeitungsanlage nach einem oder mehreren der vorhergehenden Ansprüche, **dadurch gekennzeichnet, daß** das Werkstück (2) auf einem auf einer Transportbahn (1) beweglichen Vorrichtungswagen (10) als Transportmittel aufgespannt ist und auf diesem durch die Bearbeitungsanlage (7) transportiert wird und sich der Vorrichtungswagen (10) auch in der Bearbeitungsstation bewegt.

10. Bearbeitungsanlage nach einem oder mehreren der vorhergehenden Ansprüche, **dadurch gekennzeichnet, daß** auf der Transportbahn (1) eine Transporteinheit (13) vorgesehen ist, welche eine Positioniereinheit (4) für das Halten des Werkstückes (2) aufweist und sich die Positioniereinheit (4) und/oder die Transporteinheit (13) während der Bearbeitung des Werkstückes (2) bewegt.

11. Bearbeitungsanlage nach einem oder mehreren der vorhergehenden Ansprüche, **dadurch gekennzeichnet, daß** der Vorrichtungswagen (10) eine Positioniereinheit (4) für das Halten des Werkstückes (2) aufweist.

12. Bearbeitungsanlage nach einem oder mehreren der vorhergehenden Ansprüche, **dadurch gekennzeichnet, daß** die Positioniereinheit (4) als Schlitten, Querschlitten (43), Kreuzschlitten (41) und/oder Rundtisch (40) ausgebildet ist.

13. Bearbeitungsanlage nach einem oder mehreren der vorhergehenden Ansprüche, **dadurch gekennzeichnet, daß** die Transporteinheit (13) das Werkstück (2) durch die Bearbeitungsanlage (7) transportiert und/oder die Transporteinheit (13) das Werkstück (2) in der Bearbeitungsstation (70) bewegt.

14. Bearbeitungsanlage nach einem oder mehreren der vorhergehenden Ansprüche, **dadurch gekennzeichnet, daß** eine erste Transporteinheit (13) vorgesehen ist, die das Werkstück (2) durch die Bearbeitungsanlage (7) transportiert und eine Umsetzeinheit (16) in der Bearbeitungsstation (70) das Werkstück (2) von der ersten Transporteinheit (13) in eine zweite Transporteinheit (14), und nach einer Bearbeitung zurück, umsetzt.

15. Bearbeitungsanlage nach einem oder mehreren der vorhergehenden Ansprüche, **dadurch gekennzeichnet, daß** der Vorrichtungswagen (10) oder die Transporteinheit (13) als Schiebetisch (17) ausgestaltet ist.

16. Bearbeitungsanlage nach einem oder mehreren der vorhergehenden Ansprüche, **dadurch gekennzeichnet, daß** die Transporteinheit beziehungsweise der Vorrichtungswagen eine Spannvorrichtung (40) für das Werkstück (2) aufweist.

17. Bearbeitungsanlage nach einem oder mehreren der vorhergehenden Ansprüche, **dadurch gekennzeichnet, daß** die Transportbahn (1) als Hängebahn oder Schienenbahn ausgebildet ist.

18. Bearbeitungsanlage nach einem oder mehreren der vorhergehenden Ansprüche, **dadurch gekennzeichnet, daß** die erste Transporteinheit (13) einen Greifer als Umsetzeinheit (16) aufweist, welche das Werkstück (2) hält und an die zweite Transporteinheit übergibt.

19. Bearbeitungsanlage nach einem oder mehreren der vorhergehenden Ansprüche, **dadurch gekennzeichnet, daß** die zweite Transporteinheit (14) portalartig ausgebildet ist.

20. Bearbeitungsanlage nach einem oder mehreren der vorhergehenden Ansprüche, **dadurch gekennzeichnet, daß** die Bearbeitungsanlage (7) als Transferstraße (74) mit einer Mehrzahl hintereinander angeordneten Bearbeitungsstationen (70) oder als Schiebetischmaschine (75) ausgebildet ist.

21. Transferanlage, bestehend aus einem Einführ (9')- und einem Ausführband (9) für die Werkstücke (2) und einem Roboter (8), der die Werkstücke (2) von dem Einführband (9') aufnimmt und auf eine Transportbahn (1) einer Bearbeitungsanlage (7) nach einem oder mehreren der vorhergehenden Ansprüche, insbesondere einer ringartig geschlossenen Transferstraße (75) gibt und der Roboter (8) das Werkstück (2) nach Bearbeitung von der Transportbahn (1) auf das Auflaufband (9) setzt.
